(19) Europäisches Patentamt
European Patent Office
Office européen des brevets

(11) EP 3 979 357 A1

# (12) EUROPEAN PATENT APPLICATION

published in accordance with Art. 153(4) EPC

(43) Date of publication:
**06.04.2022 Bulletin 2022/14**

(21) Application number: **19930991.5**

(22) Date of filing: **29.05.2019**

(51) International Patent Classification (IPC):
***H01M 4/04*** *(2006.01)* ***H01M 4/02*** *(2006.01)*
***H01G 11/30*** *(2013.01)* ***H01G 11/86*** *(2013.01)*
***H01M 4/62*** *(2006.01)*

(52) Cooperative Patent Classification (CPC):
**H01M 4/02; H01M 4/04;** H01G 11/30; H01G 11/86; H01M 4/62; Y02E 60/10

(86) International application number:
**PCT/JP2019/021414**

(87) International publication number:
**WO 2020/240746 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Daicel Corporation**
  **Osaka 530-0011 (JP)**
- **Daicel Miraizu Ltd.**
  **Tokyo 108-8231 (JP)**

(72) Inventors:
- **SATO, Hiroki**
  **Tokyo 108-8230 (JP)**
- **DOI, Kuniaki**
  **Tokyo 108-8231 (JP)**

(74) Representative: **Grünecker Patent- und Rechtsanwälte**
**PartG mbB**
**Leopoldstraße 4**
**80802 München (DE)**

## (54) SLURRY

(57) A slurry capable of strongly adhering an active material to a surface of a current collector even when heat-dried at high temperature is provided. The slurry according to an embodiment of the present invention contains at least an active material and a fibrous adhesion-imparting component and has a property expressed by Equation (1) below: (Peel strength $P_{60}$) / (peel strength $P_{80} \geq 0.8$) (1), where the peel strength $P_{60}$ is peel strength determined as follows: a laminate of a copper foil/a solidified product/an acrylic plate is prepared by applying the slurry to a surface of a copper foil having a thickness of 15 $\mu$m and drying at 60°C for 30 minutes to produce a solidified product with a length of 25 mm, a width of 150 mm, and a thickness of 100 $\mu$m, bonding an acrylic plate to a surface of the solidified product with a double-sided adhesive tape and reciprocating a 1-kg weight 5 times; the peel strength is determined when a copper foil edge is peeled at an angle of 90° and a speed of 100 mm/min in a state where the acrylic plate side of the resulting laminate is fixed; and the peel strength Pso is peel strength determined by the same method as the peel strength $P_{60}$ except for changing the drying conditions to 80°C for 22.5 minutes.



Printed by Jouve, 75001 PARIS (FR)

## Description

### Technical Field

The present invention relates to a slurry, an electrode including a laminate of a current collector and an active material layer formed using the slurry, and a battery provided with the electrode.

### Background Art

In recent years, batteries, such as lithium-ion secondary batteries, have been under consideration for use in hybrid vehicles and electric vehicles, in addition to use in information-related devices, such as smartphones and notebook computers. Thus, such batteries are required to have a smaller size, a higher capacity, and a longer life.

For an electrode, a method is employed in which a slurry containing an active material, a binder, and a solvent is applied onto a current collector and dried to form a coating film layer including an active material (i.e. active material layer), and thus the active material is adhered to the surface of the current collector. In addition, for the binder, styrene-butadiene rubbers (SBR) and the like are known (Patent Document 1). Furthermore, for the drying method, a method of heat drying is typically employed from the viewpoint of good production efficiency.

However, heat drying at high temperature (e.g., a temperature of 80°C or higher) causes convection in a slurry having reduced viscosity, resulting in uneven distribution of the binder. Thus, in the formed active material layer, a thinned portion with a small amount of the binder easily peels off from the surface of the current collector, which has been a problem.

### Citation List

#### Patent Documents

Patent Document 1: JP 2009-043641 A

### Summary of Invention

#### Technical Problem

As a method for solving the above problem, pre-drying at a relatively low temperature (e.g., from 40°C to 60°C) followed by gradually increasing the drying temperature is conceivable; however, this would require a long time to dry, thus causing a problem of reducing production efficiency.

Alternatively, increasing the amount of the binder to allow the active material to be retained on the current collector even when the convection in the slurry causes uneven binder distribution; however, increasing the binder would result in decreasing the content of the active material, thus also causing a problem of reducing the battery capacity.

Thus, an object of the present invention is to provide a slurry capable of strongly adhering an active material to a surface of a current collector even when heat-dried at high temperature.

Another object of the present invention is to provide a solidified product capable of strongly adhering an active material with a uniform thickness to a surface of a current collector.

Still another object of the present invention is to provide an electrode including a laminate formed by strongly adhering a solidified product with a uniform thickness to a surface of a current collector.

Yet another object of the present invention is to provide a battery provided with the electrode.

#### Solution to Problem

As a result of diligent research to solve the above problems, the present inventors found that use of a slurry containing a fibrous adhesion-imparting component can retain the viscosity of the slurry even when heat-dried at high temperature and can prevent the occurrence of convection in the slurry; and for the fibrous adhesion-imparting component, movement through the space between the active material particles is difficult and thus the movement of the fibrous adhesion-imparting component is suppressed, and uneven distribution of the binder is prevented. The present invention was completed based on these findings.

That is, the present invention provides a slurry containing at least an active material and a fibrous adhesion-imparting component, in which the slurry has a property expressed by Equation (1) below:

$$(\text{Peel strength } P_{60}) / (\text{peel strength } P_{80}) \geq 0.8 \qquad (1)$$

where the peel strength $P_{60}$ is peel strength determined as follows: a laminate of a copper foil/a solidified product/an acrylic plate is prepared by applying the slurry to a surface of a copper foil having a thickness of 15 μm and drying at 60°C for 30 minutes to produce a solidified product with a length of 25 mm, a width of 150 mm, and a thickness of 100 μm, bonding an acrylic plate to a surface of the solidified product with a double-sided adhesive tape, and reciprocating a 1-kg weight 5 times; the peel strength is determined when a copper foil edge is peeled at an angle of 90° and a speed of 100 mm/min in a state where the acrylic plate side of the resulting laminate is fixed; and the peel strength $P_{80}$ is peel strength determined by the same method as the peel strength $P_{60}$ except for changing the drying conditions to 80°C for 22.5 minutes.

The present invention also provides the slurry in which a proportion of the fibrous adhesion-imparting component in a total amount of non-volatile matter contained in the slurry is from 0.01 to 10 wt.%.

The present invention also provides the slurry in which the fibrous adhesion-imparting component is a cellulose fiber.

The present invention also provides the slurry in which the fibrous adhesion-imparting component has an average thickness from 1 to 1000 nm and an average aspect ratio from 10 to 1000.

The present invention also provides the slurry containing at least one binder selected from cellulose, carboxymethyl cellulose, hydroxyethyl cellulose, hydroxypropyl cellulose, hydroxypropyl methylcellulose, and carboxymethyl starch.

The present invention also provides a solidified product of the slurry.

The present invention also provides an electrode including a laminate of the solidified product and a current collector.

The present invention also provides a battery provided with the electrode.

Advantageous Effects of Invention

In the slurry according to an embodiment of the present invention, pieces of the fibrous adhesion-imparting component included in the slurry intertwine with each other, and thus the slurry has a moderate viscosity. In addition, the viscosity can also be maintained under high temperature conditions.

Thus, a coating film formed by applying the slurry according to an embodiment of the present invention can maintain the thickness without being reduced in thickness, even under high temperature conditions.

In addition, in the slurry according to an embodiment of the present invention, the occurrence of convection in the slurry is suppressed, even under high temperature conditions.

Furthermore, in the slurry according to an embodiment of the present invention, movement of the fibrous adhesion-imparting component through the space between the active material particles is difficult, even under high temperature conditions. Thus the movement of the fibrous adhesion-imparting component is suppressed, even under high temperature conditions in a coating film formed by application of the slurry.

Accordingly, use of the slurry according to an embodiment of the present invention enables manufacturing of a coating film uniformly containing the (fibrous) adhesion-imparting component with good yield while reducing the drying time by drying at high temperature.

That is, use of the slurry according to an embodiment of the present invention enables manufacturing of a coating film with excellent workability, the film uniformly containing the (fibrous) adhesion-imparting component and having a moderate thickness, and thus having excellent adhesion to an adherend (e.g., current collector).

Furthermore, the slurry according to an embodiment of the present invention is formed using the fibrous component as the adhesion-imparting component and thus has excellent adhesive strength for adhering the active material to the surface of an adherend (e.g., current collector) compared to a non-fibrous adhesion-imparting component. Thus, this can reduce an amount to be used compared to a case where a non-fibrous adhesion-imparting component is used. This results in relative increase in a content of the active material in the slurry and thus can provide an effect of increase in battery capacity.

Use of the slurry according to an embodiment of the present invention enables formation of an active material layer having excellent adhesion to a current collector and having an effect of increase in the battery capacity of the electrode.

In addition, the electrode including the active material layer has excellent adhesion of the active material layer to the current collector, thus can prevent the active material layer from peeling off from the current collector even when the electrode undergoes expansion and contraction due to repeated charging and discharging, and can stably maintain the battery capacity over a long period of time.

The battery including the electrode can be suitably utilized, for example, in information-related devices, such as smartphones and notebook computers; hybrid vehicles, electric vehicles, and the like.

## Description of Embodiments

### Slurry

A slurry according to an embodiment of the present invention contains at least an active material and a fibrous adhesion-imparting component. The slurry according to an embodiment of the present invention can contain an additional component (e.g., such as a binder and a solvent described below) in addition to the active material and the fibrous adhesion-imparting component.

### Active material

Examples of the active material in an embodiment of the present invention include carbon materials (carbon), single-element metals, single-element silicon (silicon), silicon compounds, mineral substances (such as zeolite, diatomaceous earth, calcined diatomite, talc, kaolin, sericite, bentonite, smectite, and clay), metal carbonates (such as magnesium carbonate, heavy calcium carbonate, and light calcium carbonate), metal oxides [alumina, zinc oxide, manganese dioxide, titanium dioxide, lead dioxide, silver oxide, nickel oxide, and lithium-containing complex oxides (such as $LiCoO_2$ and lithium titanate)], metal hydroxides (such as aluminum hydroxide, calcium hydroxide, magnesium hydroxide, nickel hydroxide, and cadmium hydroxide), and metal sulfates (such as calcium sulfate and barium sulfate). One of these can be used alone, or two or more in combination. Among these materials, at least one selected from metal oxides, lithium-containing complex oxides, single-element silicon, silicon compounds, and carbon materials is preferred.

Examples of the single-element silicon include amorphous silicon and low crystalline silicon.

Examples of the silicon compound include silicon oxides (such as SiO), metal silicates (such as calcium silicate, aluminum silicate, magnesium silicate, and magnesium aluminosilicate), alloys of silicon and a transition metal (such as tin or titanium), silicon composites (such as a composite of silicon and SiO), and silicon carbide.

Examples of the carbon material include natural graphite, synthetic graphite, amorphous carbon, hard carbon, graphite, mesocarbon microbeads, and pitch-based carbon fibers.

Preferably, the active material is selected and used appropriately according to the application of the slurry. For example, when the slurry is a slurry for forming a lithium-ion battery cathode, the slurry preferably contains, as a cathode active material, a lithium-containing complex oxide (particularly lithium cobaltate, lithium nickelate, lithium manganate, and an alloy of them). In addition, when the slurry is a slurry for forming a lithium-ion battery anode, the slurry preferably contains, as an anode active material, at least one selected from single-element silicon, silicon compounds, carbon materials (particularly graphite), and metal oxides [such as lithium-containing complex oxides (particularly lithium titanate and niobium titanium-based oxides), alloys and oxides of Ti, Sn, or Co].

### Fibrous adhesion-imparting component

The fibrous adhesion-imparting component in an embodiment of the present invention retains a fibrous shape in the slurry, and pieces of the fibrous adhesion-imparting component intertwine with each other and form a three-dimensional network structure. Such a three-dimensional network structure retains the shape even under high temperature conditions (e.g., under conditions of 80°C or higher). In an embodiment of the present invention, the adhesion-imparting component is a component that has an effect of adhering and fixing the active material to a surface of an adherend (preferably a current collector).

The slurry according to an embodiment of the present invention containing the fibrous adhesion-imparting component prevents a decrease in viscosity even under high temperature conditions, thus preventing the occurrence of convection. That is, the viscosity imparted by the fibrous adhesion-imparting component is temperature independent.

In addition, the slurry according to an embodiment of the present invention containing the fibrous adhesion-imparting component can suppress movement of the fibrous adhesion-imparting component even under high temperature conditions.

The slurry according to an embodiment of the present invention may contain one fibrous adhesion-imparting component alone or two or more in combination.

Examples of the fibrous adhesion-imparting component include cellulose fibers, aramid fibers, polyphenylene sulfide fibers, polyimide fibers, fluorine fibers, glass fibers, carbon fibers, poly-p-phenylenebenzoxazole fibers, polyether ether ketone fibers, and liquid crystal polymer fibers.

An average thickness of the fibrous adhesion-imparting component is not particularly limited but is, for example, from 1 to 1000 nm and, in particular, preferably from 3 to 500 nm and particularly preferably from 3 to 200 nm in that pieces of the fibrous adhesion-imparting component intertwine with each other to form a stable three-dimensional network structure and thus can reduce the temperature dependence of the viscosity of the slurry. The average thickness of the fibrous adhesion-imparting component is determined as follows: the thicknesses (diameters) of a sufficient number (e.g.,

10 or more pieces) of the fibrous adhesion-imparting component are measured using an electron microscope (SEM or TEM) or an atomic force microscope (AFM); and an arithmetic average of the measurement results is calculated.

An average length of the fibrous adhesion-imparting component is not particularly limited but is, for example, from 0.01 to 1000 μm and, in particular, preferably from 0.3 to 200 μm, particularly preferably from 0.5 to 100 μm, and most preferably from 1 to 20 μm in that pieces of the fibrous adhesion-imparting component intertwine with each other to form a stable three-dimensional network structure and thus can reduce the temperature dependence of the viscosity of the slurry. The average length of the fibrous adhesion-imparting component is determined as follows: the lengths of a sufficient number (e.g., 10 or more pieces) of the fibrous adhesion-imparting component are measured using an electron microscope (SEM or TEM); and an arithmetic average of the measurement results is calculated. A length of the fibrous adhesion-imparting component should be measured in a state where the component is extended straight, but many fibrous adhesion-imparting components are actually bent. Thus, a projected diameter and a projected area of the fibrous adhesion-imparting component are calculated from the electron microscopic image using an image analyzer, and assuming that the fibrous adhesion-imparting component is a cylinder, the length of the fibrous adhesion-imparting component is calculated from the following equation.

$$\text{Length} = \text{projected area}/\text{projected diameter}$$

An average aspect ratio, (average length/average thickness), of the fibrous adhesion-imparting component is not particularly limited but is, for example, from 10 to 1000 and, in particular, preferably from 15 to 500 and particularly preferably from 20 to 100 in that pieces of the fibrous adhesion-imparting component intertwine with each other to form a stable three-dimensional network structure and thus can reduce the temperature dependence of the viscosity of the slurry.

In particular, the fibrous adhesion-imparting component is preferably at least one selected from cellulose fibers, aramid fibers, carbon fibers, and carbon nanotubes in that such a material is less likely to deteriorate by an oxidation-reduction reaction of a battery and has excellent stability over time. Among others, a cellulose fiber and/or an aramid fiber are preferred, and a cellulose fiber is especially preferred in that pieces of the fibrous adhesion-imparting component intertwine with each other and thus can form a stable three-dimensional network structure.

Cellulose fiber

The cellulose fiber can be manufactured by subjecting raw material pulp to milling, grinding, shredding, or crushing. Cotton linters or wood pulp can be used for the raw material pulp. In addition, the wood pulp includes hardwood pulp and softwood pulp.

For the cellulose fiber, for example, a commercially available product, such as "CELISH" (microfibrous cellulose available from Daicel FineChem Ltd.), may be used.

Aramid fiber

The aramid fiber is a fiber composed of a polymer having a structure in which two or more aromatic rings are bonded via an amide bond (i.e., a wholly aromatic polyamide), and the wholly aromatic polyamide includes a meta type and a para type. Examples of the wholly aromatic polyamide include polymers having a constituent unit represented by Formula (a) below:

[Chem. 1]

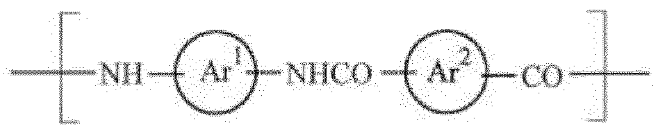

(a)

where $Ar^1$ and $Ar^2$ are identical or different and each represent an aromatic ring or a group in which two or more aromatic rings are bonded via a single bond or a linking group. Examples of the aromatic ring include aromatic hydrocarbon rings having from 6 to 10 carbon atoms, such as a benzene ring or a naphthalene ring. Examples of the linking group include a divalent hydrocarbon group (e.g., such as a linear or branched alkylene group having from 1 to 18 carbon atoms and a divalent alicyclic hydrocarbon group having from 3 to 18 carbon atoms), a carbonyl group (-CO-), an ether bond (-O-), an ester bond (-COO-), -NH-, and $-SO_2-$. In addition, the aromatic ring may have a substituent of various types [e.g.,

such as a halogen atom, an alkyl group (e.g., a $C_{1-4}$ alkyl group), an oxo group, a hydroxyl group, a substituted oxy group (e.g., such as a $C_{1-4}$ alkoxy group and a $C_{1-4}$ acyloxy group), a carboxyl group, a substituted oxycarbonyl group (e.g., a $C_{1-4}$ alkoxycarbonyl group), a cyano group, a nitro group, a substituted or unsubstituted amino group (e.g., such as monoor di-$C_{1-4}$ alkylamino group), or a sulfo group]. Furthermore, an aromatic or nonaromatic heterocyclic ring may be fused to the aromatic ring.

The aramid fiber can be manufactured, for example, by reacting (e.g., such as solution polymerization or interfacial polymerization) at least one aromatic diamine to a halide of at least one aromatic dicarboxylic acid.

Examples of the aromatic dicarboxylic acid include isophthalic acid, terephthalic acid 1,4-naphthalenedicarboxylic acid, 2,6-naphthalenedicarboxylic acid, 4,4'-biphenyldicarboxylic acid, 3,3'-biphenyldicarboxylic acid, and 4,4'-diphenylether dicarboxylic acid.

Examples of the aromatic diamine include p-phenylenediamine, m-phenylenediamine, 4,4'-diaminobiphenyl, 2,4-diaminodiphenylamine, 4,4'-diaminobenzophenone, 4,4'-diaminodiphenylether, 4,4'-diaminodiphenylmethane, 4,4'-diaminodiphenylamine, 4,4'-diaminodiphenylsulfone, 2,4-diaminotoluene, 2,6-naphthalenediamine, and 1,5-naphthalenediamine.

The aramid fiber can be manufactured by spinning the wholly aromatic polyamide into fibers by a well-known and commonly used method (e.g., through processes, such as spinning, washing, and drying). In addition, after spun into fibers, the wholly aromatic polyamide can be subjected to treatment, such as shredding, as necessary. For example, the fibers can be microfibrillated by applying strong mechanical shear force with an ultrahigh-pressure homogenizer or the like.

For the aramid fiber, a commercially available product, such as, for example, "Tiara" (available from Daicel FineChem Ltd.), may be used.

Additional component

The slurry according to an embodiment of the present invention may contain one, or two or more additional components in addition to the components described above. Examples of the additional component include a binder, a solvent, and a conductivity imparting material.

Binder

The binder is a compound that is added to the slurry and thereby improving the adhesion of a solidified product of the slurry to an adherend and imparting flexibility to the solidified product of the slurry.

The binder preferably has excellent heat resistance in terms of an ability to retain adhesive strength even under high temperature conditions and has a melting point (decomposition temperature for a binder having no melting point) of, for example, preferably not lower than 120°C, more preferably not lower than 150°C, and particularly preferably not lower than 160°C. An upper limit of the melting point of the binder (decomposition temperature for a binder having no melting point) is, for example, 400°C.

A viscosity of a 1 wt.% aqueous solution of the binder (at 25°C and 60 rotations) is, for example, preferably from 10 to 10000 mPa·s in terms of an ability to impart a moderate viscosity to the slurry by adding a small amount, and particularly preferably from 50 to 5000 mPa·s and most preferably from 100 to 5000 mPa·s.

The binder is preferably an aqueous binder in terms of having a small environmental load. Examples of the aqueous binder include polysaccharides or their derivatives (1), a compound having a constituent unit represented by Formula (2) below, and a compound having a constituent unit represented by Formula (3) below. One of these can be used alone or two or more in combination.

[Chem. 2]

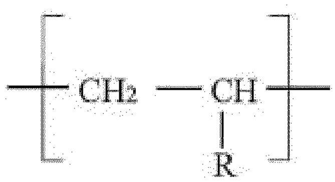

(2)

where R represents a hydroxyl group, a carboxyl group, a phenyl group, an N-substituted or unsubstituted carbamoyl group, or a 2-oxo-1-pyrrolidinyl group.

[Chem. 3]

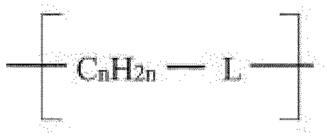

(3)

where n represents an integer of 2 or greater, and L represents an ether bond or a (-NH-) group.

Examples of the N-substituted carbamoyl group in Formula (2) above include N-$C_{1-4}$ alkyl-substituted carbamoyl groups, such as -$CONHCH(CH_3)_2$ and-$CON(CH_3)_2$ groups.

The carboxyl group in Formula (2) above may form a salt with an alkali.

In Formula (3) above, n is an integer of 2 or greater, for example, an integer of 2 to 5 and preferably an integer of 2 or 3. Thus, the [$C_nH_{2n}$] group in Formula (3) is an alkylene group having 2 or more carbon atoms, and examples of such a group include a dimethylene group, a methylmethylene group, a dimethylmethylene group, and a trimethylene group.

The compound having a constituent unit represented by Formula (2) above and the compound having a constituent unit represented by Formula (3) above may have a constituent unit other than the constituent unit represented by Formula (2) and the constituent unit represented by Formula (3), respectively.

Examples of the compound having a constituent unit represented by Formula (2) above include diene rubbers, such as styrene-butadiene rubber (SBR), acrylonitrile-butadiene rubber (NBR), methyl methacrylate-butadiene rubber (MBR), and butadiene rubber (Br); acrylic-based polymers, such as polyacrylic acid, sodium polyacrylate, acrylic acid/maleic acid copolymer-sodium salt, and acrylic acid/sulfonic acid copolymer-sodium salt; acrylamide-based polymers, such as polyacrylamide, poly-N-isopropyl acrylamide, and poly-N,N-dimethylacrylamide; and polyvinylpyrrolidone.

Examples of the compound having a constituent unit represented by Formula (3) above include polyalkylene glycols, such as polyethylene glycol and polypropylene glycol; and polyethyleneimine.

The polysaccharide or its derivative (1) is a compound formed by polymerization of two or more monosaccharides through a glycosidic bond(s). In an embodiment of the present invention, among others, the polysaccharide or its derivative (1) is preferably a compound or its derivative formed by polymerization of glucose (e.g., $\alpha$-glucose or $\beta$-glucose) through a glycosidic bond(s) and, in particular, preferably at least one selected from cellulose, starch, glycogen, and their derivatives.

The polysaccharide or its derivative (1) is, among others, preferably a cellulose or its derivative in terms of providing excellent heat resistance and viscosity imparting effect. Examples of the cellulose or its derivative include compounds having a constituent unit represented by Formula (1-1) below:

[Chem. 4]

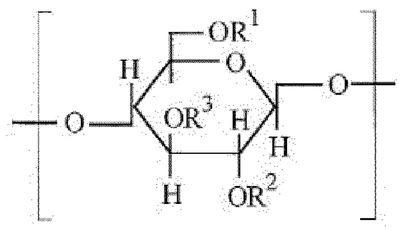

(1-1)

where $R^1$ to $R^3$ are identical or different and each represent a hydrogen atom or an alkyl group having from 1 to 5 carbon atoms and having a hydroxyl group or a carboxyl group. Note that the hydroxyl group and carboxyl group may form a salt with an alkali.

Examples of the alkyl group having from 1 to 5 carbon atoms include a methyl group, an ethyl group, a propyl group, an isopropyl group, a butyl group, an isobutyl group, a s-butyl group, a t-butyl group, and a pentyl group.

The hydroxyl group and carboxyl group may form a salt with an alkali and, for example, may form a salt with sodium, ammonium, a nitrogen-containing heterocyclic compound (such as imidazole), or lithium.

Specific examples of the derivative of the cellulose include hydroxyethyl cellulose, hydroxypropyl cellulose, carboxymethyl cellulose, and their alkali salts (e.g., sodium carboxymethyl cellulose and ammonium carboxymethyl cellulose).

The binder is, among others, preferably at least one aqueous binder selected from polysaccharides or their derivatives (1) and compounds having a constituent unit represented by Formula (3) above, in terms of a small environmental load, excellent viscosity imparting effect, and an ability to impart a suitable viscosity to the slurry for application

even with an addition in a small amount. The aqueous binder is, for example, a binder having a solubility of 1 g/L or higher in water at 20°C or a binder dispersible in water at 20°C with a particle size of 1 μm or smaller (particle diameter measurement method: laser diffraction method).

The binder is preferably a polysaccharide or its derivative (1) and, among others, preferably a cellulose or its derivative in terms of a small environmental load, excellent viscosity imparting effect, and an ability to impart a suitable viscosity to the slurry for application even with an addition in a small amount.

Solvent

The solvent is preferably at least one selected, for example, from water; alcohols, such as methanol, ethanol, propanol, and 2-propanol; cyclic ethers, such as tetrahydrofuran and 1,4-dioxane; chain amides, such as N,N-dimethylformamide and N,N-dimethylacetamide; cyclic amides, such as N-methylpyrrolidone and N-ethylpyrrolidone; and sulfoxides, such as methyl sulfoxide. Among them, water is preferably used in terms of having a small environmental load and an excellent safety profile.

Conductivity imparting material

Examples of the conductivity imparting material include metal powders, conducting polymers, and acetylene black.

The conductivity imparting material may be fibrous. Examples of the fibrous conductivity imparting material include fibrous materials containing a conducting material, such as a metal, a semiconductor, a carbon material, or a conducting polymer.

Examples of the metal include well-known or commonly used metals, such as gold, silver, copper, iron, nickel, cobalt, tin, and their alloys.

Examples of the semiconductor include well-known or commonly used semiconductors, such as cadmium sulfide and cadmium selenide.

Examples of the carbon material include well-known or commonly used carbon materials, such as carbon fibers and carbon nanotubes.

Examples of the conducting polymer include polyacetylene, polyacene, poly p-phenylene, poly p-phenylenevinylene, polypyrrole, polyaniline, polythiophene, and their derivatives (e.g., those having a substituent, such as an alkyl group, a hydroxyl group, a carboxyl group, or an ethylenedioxy group, in the common polymer backbone; specifically including polyethylenedioxythiophene).

Method of manufacturing slurry

The slurry according to an embodiment of the present invention can be manufactured by uniformly mixing the components described above using a commonly known device for mixing, such as a rotation/revolution agitating/defoaming apparatus, a homodisper, a homogenizer, a planetary mixer, a three-roll mill, or a bead mill. The components above may be mixed simultaneously or sequentially.

In the slurry according to an embodiment of the present invention, pieces of the fibrous adhesion-imparting component intertwine with each other in a state of being dispersed in the slurry and form a three-dimensional network structure. Such a three-dimensional network is retained intact even under high temperature conditions (e.g., under temperature conditions of 80°C or higher). Thus, the slurry according to an embodiment of the present invention has a viscosity with low temperature dependence and maintains the viscosity at room temperature even under high temperature conditions.

The viscosity of the slurry according to an embodiment of the present invention at 25°C (= viscosity at 25°C) is, for example, from 0.6 to 100 Pa·s, and in terms of providing excellent coatability, the viscosity at 25°C is preferably from 0.8 to 50 Pa·s and particularly preferably from 1.0 to 30 Pa·s. The viscosity of the slurry can be adjusted, for example, by adding a solvent.

From the perspective that the shape of the coating film is easily preserved when the temperature is raised to a high temperature drying condition, a lowest viscosity of the slurry according to an embodiment of the present invention during a temperature increase to 80°C is preferably, for example, from 0.25 to 90 Pa·s, more preferably from 0.5 to 45 Pa·s, and particularly preferably from 1 to 30 Pa·s.

When the temperature of the slurry is increased from 25°C to 80°C, the viscosity typically decreases, but a ratio of the lowest viscosity during temperature increase to 80°C to the viscosity at 25°C, (the lowest viscosity during temperature increase to 80°C/the viscosity at 25°C), of the slurry according to an embodiment of the present invention is, for example, 0.12 or greater. From the viewpoint that the temperature dependence of the viscosity of the slurry can be further reduced and a uniform and thick coating film is efficiently formed, the ratio of the lowest viscosity during

temperature increase to 80°C to the viscosity at 25°C of the slurry is preferably 0.15 or greater, more preferably 0.2 or greater, more preferably 0. 25 or greater, more preferably 0.3 or greater, more preferably 0.4 or greater, more preferably 0.5 or greater, more preferably 0.6 or greater, more preferably 0.7 or greater, even more preferably 0.8 or greater, and particularly preferably 0.9 or greater.

The lowest viscosity during temperature increase to 80°C is the lowest viscosity in a viscosity trend due to the increase in the temperature of the slurry according to an embodiment of the present invention from 25°C to 80°C at 15°C/min.

In addition, when a portion of the slurry gels, the viscosity increases while the temperature of the slurry is increased from 25°C to 80°C. However, when the slurry gels, the slurry may not dry easily, and thus drying the slurry requires a long time and work efficiency is reduced; thus, this is not preferred. Thus, from the viewpoint that the slurry can be dried efficiently at a high temperature, a ratio of the highest viscosity during temperature increase to 80°C to the viscosity at 25°C, (the highest viscosity during temperature increase to 80°C) / (the viscosity at 25°C), according to an embodiment of the present invention is preferably 3.0 or less, more preferably 2.5 or less, more preferably 2.0 or less, more preferably 1.5 or less, and particularly preferably 1.0 or less.

The highest viscosity during temperature increase to 80°C is the highest viscosity in a viscosity trend due to the increase in the temperature of the slurry according to an embodiment of the present invention from 25°C to 80°C at 15°C/min.

The viscosity of the slurry according to an embodiment of the present invention is a complex viscosity measured using an MCR rheometer under conditions of a frequency of 1 Hz.

The slurry according to an embodiment of the present invention has the viscosity properties described above. Thus, when the viscosity of the slurry is adjusted to a viscosity with which the slurry is easily applied at room temperature (e.g., 25°C) and the slurry is applied to form a thick and uniform coating film, a decrease in viscosity of the coating film is suppressed even in a case where the coating film is heat-dried at high temperature immediately after the formation. Thus, the shape of the coating film is preserved, and a thick and uniform solidified product can be manufactured with a good yield.

A content of the active material in a total amount (100 wt.%) of non-volatile matter contained in the slurry according to an embodiment of the present invention is, for example, 90 wt.% or higher, preferably 95 wt.% or higher, and particularly preferably 99 wt.% or higher. An upper limit of the content of the active material is, for example, 99.98 wt.%. The slurry according to an embodiment of the present invention contains the active material at a high concentration in the range as described above; thus, use of this can form an electrode with high battery capacity.

A content of the fibrous adhesion-imparting component in a total amount (100 wt.%) of non-volatile matter contained in the slurry according to an embodiment of the present invention is, for example, from 0.01 to 10.0 wt.%, preferably from 0.1 to 5.0 wt.%, and particularly preferably from 0.3 to 3.0 wt.%.

A content of the binder in a total amount (100 wt.%) of non-volatile matter contained in the slurry according to an embodiment of the present invention is, for example, from 0.01 to 10.0 parts by weight, preferably from 0.1 to 5 parts by weight, and particularly preferably from 0.3 to 3.0 parts by weight.

A total content of the fibrous adhesion-imparting component and the binder in a total amount (100 wt.%) of non-volatile matter contained in the slurry according to an embodiment of the present invention is, for example, from 0.01 to 20.0 wt.%, preferably from 0.1 to 10.0 wt.%, and particularly preferably from 0.5 to 5.0 wt.%.

A total content of the binder and the fibrous adhesion-imparting component in the slurry according to an embodiment of the present invention is, for example, from 0.02 to 20 wt.%, preferably from 0.1 to 10 wt.%, and more preferably from 0.5 to 5 wt.%.

In the slurry according to an embodiment of the present invention, a content ratio of the fibrous adhesion-imparting component to the binder, (former/latter; weight ratio), is, for example, from 0.1 to 5.0, preferably from 0.1 to 3.0, and most preferably from 0.5 to0.

The slurry according to an embodiment of the present invention contains the fibrous adhesion-imparting component in the above range and thus can reduce the temperature dependence of the viscosity of the slurry. When the content of the fibrous adhesion-imparting component is below the above range, the temperature dependence of the viscosity of the slurry would increase, and the shape of the coating film would be likely to collapse under high temperature conditions, and efficient formation of a uniform and thick solidified product tends to be difficult.

A content of the fibrous adhesion-imparting component in the slurry according to an embodiment of the present invention is, for example, from 0.01 to 10.0 parts by weight, preferably from 0.1 to 5.0 parts by weight, and particularly preferably from 0.3 to 2.0 parts by weight relative to 100 parts by weight of the active material. The slurry according to an embodiment of the present invention contains a fibrous material as the adhesion-imparting component. Thus, even in a case where the content of the (fibrous) adhesion-imparting component is reduced to the above range, the adhesive strength of the active material to the current collector is retained, thus the content of the active material can be increased and an electrode with high battery capacity can be achieved while the adhesive strength is retained. In a case where the content of the fibrous adhesion-imparting component exceeds the above range, relative decrease in the content of

the active material would tend to reduce the battery capacity of the electrode. On the other hand, in a case where the content of the fibrous adhesion-imparting component is below the above range, retention of the active material content on the surface of the current collector would become difficult, causing the active material to be peeled off from the current collector and thus the battery capacity of the electrode may tend to be reduced.

A content of the binder in the slurry according to an embodiment of the present invention is, for example, from 0.01 to 10.0 parts by weight, preferably from 0.1 to 5.0 parts by weight, and particularly preferably from 0.3 to 2.0 parts by weight relative to 100 parts by weight of the active material.

A total content of the binder, the fibrous adhesion-imparting component, and the active material in the slurry according to an embodiment of the present invention is, for example, from 20 to 70 wt.% and preferably from 35 to 60 wt.% of the total amount of the slurry.

A content of the binder in a supernatant obtained by centrifugation of (e.g., 5000 rpm x 5 minutes) the slurry according to an embodiment of the present invention is 45 wt.% or higher, preferably 60 wt.% or higher, particularly preferably 80 wt.% or higher, and most preferably 95 wt.% or higher of the total amount of the binder contained in the slurry.

The slurry according to an embodiment of the present invention has the above properties and thus can exhibit excellent adhesion even without an increase in the content of the (fibrous) adhesion-imparting component or even with a reduction in content of the (fibrous) adhesion-imparting component compared to the content known in the art. Thus, the slurry according to an embodiment of the present invention can improve the adhesive strength without a reduction in the content of the active material or with an increase in the content of the active material compared to the content known in the art and an electrode with both excellent adhesive strength and high battery capacity can be formed.

In addition, in the slurry according to an embodiment of the present invention, pieces of the fibrous adhesion-imparting component intertwine with each other in a state of being dispersed between the active material particles and form a three-dimensional network structure. Furthermore, the three-dimensional network structure is retained even under high temperature conditions (e.g., under conditions of 80°C or higher). Thus, for the slurry according to an embodiment of the present invention, the decrease in viscosity due to the temperature increase can be suppressed. That is, the slurry according to an embodiment of the present invention has a viscosity with low temperature dependence.

Thus, when the viscosity of the slurry according to an embodiment of the present invention is adjusted to a viscosity with which the slurry is easily applied at room temperature (e.g., 25°C), the slurry is applied to form a thick and uniform coating film, and subjected to heat-drying at high temperature conditions (e.g., 80°C) immediately after the formation, the decrease in viscosity of the coating film is suppressed. Thus, the shape of the coating film is preserved without collapse and a thick and uniform solidified product can be efficiently formed.

Solidified product

The solidified product according to an embodiment of the present invention is a solidified product of the slurry. The solidified product according to an embodiment of the present invention can be manufactured, for example, by applying the slurry to the surface of an adherend and drying the slurry to solidify the slurry.

The adherend to which the slurry is applied is not particularly limited, and examples include well-known or commonly used various substrates having a surface for coating, such as metal substrates, plastic substrates, ceramic substrates, semiconductor substrates, glass substrates, paper substrates, and wood substrates. In an embodiment of the present invention, among others, a metal substrate (more preferably a metal foil) that acts as a current collector is preferably used.

An amount of the slurry to be applied to the adherend is, for example, approximately from 20 to 350 $g/m^2$ and preferably from 80 to 200 $g/m^2$. An applied thickness in terms of coating film thickness after drying is preferably 5 μm or greater, more preferably 50 μm or greater, even more preferably 100 μm or greater, and particularly preferably 200 μm or greater. An upper limit is, for example, 500 μm and preferably 400 μm.

Examples of the method of applying the slurry include screen printing methods, mask printing methods, offset printing methods, inkjet printing methods, flexographic printing methods, gravure printing methods, stamping, dispensing, squeegee printing methods, silk screen printing methods, spraying, and brushing. In addition, for applying the slurry, a film applicator, a bar coater, a die coater, a comma coater, a gravure coater, a blade coater, or the like can be used.

The slurry has a viscosity with low temperature dependence and thus can maintain the shape of the coating film even when the coating film is heat-dried at high temperature. Thus, the coating film can be efficiently dried in a short time to form a solidified product. A drying temperature is, for example, from 70 to 150°C and preferably from 80 to 120°C. A drying time is, for example, from 1 minute to 5 hours and preferably from 10 minutes to 1 hour under the drying temperature conditions described above.

For the method of drying the slurry, a well-known method in the art, such as reduced pressure and blowing, may be used in addition to heat drying.

Electrode

The electrode according to an embodiment of the present invention includes a laminate of the solidified product of the slurry and the current collector. More preferably, the electrode includes a laminate of an active material layer formed from the solidified product and the current collector. The electrode according to an embodiment of the present invention may contain a component in addition to the solidified product and the current collector.

The electrode according to an embodiment of the present invention can be manufactured, for example, by applying the slurry to at least one surface of the current collector and subsequently drying the slurry to solidify the slurry.

The current collector includes a cathode current collector and an anode current collector. In addition, the cathode current collector is formed, for example, of an aluminum foil. Furthermore, the anode current collector is formed, for example, of a copper foil.

The amount of the slurry to be applied to the current collector, the method of applying, the method of drying the coating film, and the thickness of the coating film after drying are the same as the amount of the slurry to be applied to the adherend, the method of applying, the method of drying the coating film, and the thickness of the coating film after drying described above.

The solidified product (or active material layer) and the current collector constituting the electrode according to an embodiment of the present invention are adhered with excellent adhesive strength, and the peel strength is, for example, 1.0 N/m or higher, preferably 2.0 N/m or higher, and particularly preferably 10.0 N/m or higher. The upper limit of the peel strength is, for example, 70.0 N/m.

In addition, the electrode according to an embodiment of the present invention is manufactured using the slurry with a viscosity with small temperature dependence described above. Thus, even when the slurry is heat-dried at high temperature in the manufacturing process, a solidified product (or active material layer) with a uniform film thickness can be formed on the surface of the current collector with a good yield.

A difference between a film thickness at an edge and a film thickness at a center of the solidified product (or active material layer) is small, and a ratio of the film thickness at the edge to the film thickness at the center (edge film thickness/central film thickness) is, for example, 0.9 or greater, preferably 0.95 or greater, and particularly preferably 0.98 or greater.

The ratio of the edge film thickness to the central film thickness of the solidified product (or active material layer) can be measured by the following method.

1. The slurry according to an embodiment of the present invention is uniformly applied to one side of a square copper foil having a thickness of 15 $\mu$m and a side length of 150 mm to give a coating film thickness after drying of 50 $\mu$m or greater.
2. The foil is placed so that the coating film faces upward, and subjected to temperature increase to 80°C, and the coated film is dried and solidified for 1 hour to form a solidified product (or active material layer).
3. The ratio of the edge film thickness to the central film thickness is calculated. A film thickness at a portion where the film thickness is smallest at an edge of the formed solidified product (or active material layer) is defined as the edge film thickness and a film thickness at a portion where the film thickness is largest is defined as the central film thickness. The film thicknesses of the solidified product (or active material layer) can be measured, for example, with a micrometer (available from Mitutoyo Corporation).

Furthermore, regardless of the heat-drying temperature in the manufacturing process, the electrode according to an embodiment of the present invention has excellent adhesion between the solidified product and the current collector and has a property expressed by Equation (1) below:

$$(\text{Peel strength } P_{60}) / (\text{peel strength } P_{80}) \geq 0.8 \quad (1)$$

where the peel strength $P_{60}$ is peel strength determined as follows: a laminate of a copper foil/a solidified product/an acrylic plate is prepared by applying the slurry to a surface of a copper foil having a thickness of 15 $\mu$m and drying at 60°C for 30 minutes to produce a solidified product with a length of 25 mm, a width of 150 mm, and a thickness of 100 $\mu$m, bonding an acrylic plate to a surface of the solidified product with a double-sided adhesive tape, and reciprocating a 1-kg weight 5 times; the peel strength is determined when a copper foil edge is peeled at an angle of 90° and a speed of 100 mm/min in a state where the acrylic plate side of the resulting laminate is fixed; and the peel strength Pso is peel strength determined by the same method as the peel strength $P_{60}$ except for changing the drying conditions to 80°C for 22.5 minutes.

The peel strength ratio (peel strength $P_{60}$/peel strength $P_{80}$) is 0.8 or greater, preferably 0.85 or greater, and particularly preferably 0.9 or greater. The upper limit is 2.0.

The peel strength $P_{60}$ of the solidified product according to an embodiment of the present invention is, for example, 1 N/m or higher, preferably 2 N/m or higher, and particularly preferably 10 N/m or higher. An upper limit of the peel strength is, for example, 70 N/m.

The peel strength $P_{80}$ of the solidified product according to an embodiment of the present invention is, for example, 1 N/m or higher, preferably 2 N/m or higher, and particularly preferably 10 N/m or higher. An upper limit of the peel strength is, for example, 70 N/m.

In addition, the peel strength ratio (peel strength $P_{60}$/peel strength $P_{120}$) of the solidified product according to an embodiment of the present invention is, for example, 0.7 or greater, preferably 0.8 or greater, particularly preferably 0.9 or greater, and most preferably 0.95 or greater. An upper limit is 2.0.

The peel strength $P_{120}$ of the solidified product according to an embodiment of the present invention is, for example, 1 N/m or higher, preferably 2 N/m or higher, and particularly preferably 10 N/m or higher. An upper limit of the peel strength is, for example, 70 N/m.

The peel strength $P_{120}$ is a peel strength determined by the same method as the peel strength $P_{60}$ except for changing the drying conditions to 120°C for 15 minutes.

In addition, a film thickness of the active material layer of the electrode according to an embodiment of the present invention is, for example, 50 μm or greater, preferably 80 μm or greater, and particularly preferably 100 μm or greater.

The density of the solidified product (or active material layer) is uniform as described above, and thus the electrode according to an embodiment of the present invention has high capacity and high quality.

In addition, the electrode according to an embodiment of the present invention includes the thick solidified product (or active material layer) and thus has high battery capacity.

Furthermore, the electrode according to an embodiment of the present invention has excellent adhesion between the solidified product (or active material layer) and the current collector, thus can prevent the solidified product (or active material layer) from peeling off from the current collector even when the electrode undergoes expansion and contraction due to repeated charging and discharging, and can stably maintain the high battery capacity over a long period of time.

Battery

A battery according to an embodiment of the present invention includes the electrode described above.

The battery includes a wound battery formed by laminating electrodes (a cathode and an anode) and a separator, winding the laminate, and enclosing the wound laminate in a container, such as a can, together with an electrolyte solution; and a laminated battery formed by laminating electrodes (a cathode and an anode) and a separator to form a sheet-shaped product and encapsulating the sheet-shaped product in a relatively flexible outer package together with an electrolyte solution.

The battery according to an embodiment of the present invention include secondary batteries, such as lithium-ion batteries, nickel-hydrogen rechargeable batteries, and nickel-cadmium batteries; primary batteries, such as manganese dry batteries, alkaline manganese batteries, and lithium primary batteries; and electric double-layer capacitors.

The battery according to an embodiment of the present invention includes the electrode including the thick active material layer (the thickness of the active material layer is, e.g., 50 μm or greater) formed on the current collector and thus has high battery capacity. Thus, the battery according to an embodiment of the present invention can be suitably used in information-related devices, such as smartphones and notebook computers; hybrid vehicles, electric vehicles, and the like.

Examples

Hereinafter, the present invention will be described more specifically with reference to examples, but the present invention is not limited by these examples.

Preparation Example 1 (preparation of cellulose nanofiber (CNF) slurry solution)

Commercially available hardwood pulp was suspended in water, and 100 L of a 1 wt.% slurry solution (1) was obtained.

The resulting slurry solution was then subjected to refining by beating 10 times with a clearance of 0.15 mm and at a disk rotational speed of 1750 rpm using a disc refiner (trade name "SUPERFIBRATER 400-TFS" available from Hasegawa Refrigeration, Ltd.).

The 1 wt.% slurry solution after refining was further homogenized 50 times at a processing pressure of 50 MPa using a homogenizer (trade name "15M8AT" available from Gaulin Corporation) equipped with a crushing type homovalve sheet.

The 1 wt.% slurry solution after refining and homogenization was repeatedly filtered through gauze, and a slurry solution with a non-volatile matter concentration of 9.9 wt.% was obtained.

Water was added to the resulting 9.9 wt.% slurry solution, the mixture was stirred at 3000 rpm for 5 minutes using a homodisper (Model L available from Tokushu Kika Kogyo Co., Ltd.), and a 1.2 wt.% slurry solution was obtained. The resulting 1.2 wt.% slurry solution was used as a CNF slurry solution (1).

Ten pieces of fiber contained in the resulting CNF slurry solution (1) were randomly selected and observed using electron microscopes (SEM and TEM) to measure the lengths and diameters. This resulted in an average thickness of the 10 pieces of the fiber of 79.2 nm, an average length of 6.14 μm, and an average aspect ratio (average length/average thickness) of 78.

Example 1

Manufacturing of slurry

84 g of the CNF slurry solution (1) obtained in Preparation Example 1 was charged in a polypropylene container, and 67.5 g of a 1.5 wt.% CMC aqueous solution (CMC: carboxymethylcellulose sodium salt; a decomposition temperature of 290°C or higher, viscosity of a 1 wt.% aqueous solution at 25°C and 60 rotations: 1500 to 3000 mPa·s; available from Daicel FineChem Ltd., Product No. 2200) was added. Then, 99.0 g of artificial graphite (average particle size: approximately 20 μm) was added as an active material. The solution mixture was stirred for 30 minute at 3000 rpm using a homodisper (available from Tokushu Kika Kogyo Co., Ltd., Model L), resulting in slurry (1). The viscosity of the resulting slurry (1) at 25°C (complex viscosity measured under conditions of a frequency of 1 Hz using an MCR rheometer) was 9.745 Pa·s.

Manufacturing of electrode

The resulting slurry (1) was applied to a square copper foil having a thickness of 15 μm and a side length of 150 mm using an applicator to give a coating film thickness after drying of 50 μm or greater. Thereafter, with the coating films facing upward, the copper foil was subjected to drying and solidification at 60°C for 30 minutes to produce electrodes having an electrode active material layer formed on one side of the copper foil (solidified product/copper foil).

Evaluation of adhesion

The adhesion of the solidified product to the copper foil was evaluated by the following procedure.

1. The resulting electrode (solidified product/copper foil) was cut to a size of 25 mm x 150 mm, and a sample was obtained.
2. The resulting sample was placed on an aluminum vat and was allowed to stand in a constant temperature and humidity chamber (a temperature of 23°C and a humidity of 50%) overnight.
3. The thickness of the sample was measured.
4. A 10-cm long double-sided adhesive tape (NICETACK NW-25 available from Nichiban Co., Ltd.) was applied to a surface of an acrylic plate, and the acrylic plate was bonded to the solidified product side surface of the electrode (solidified product/copper foil). A 1-kg weight was reciprocated 5 times to uniformly adhere the acrylic plate to the solidified product side surface, and a laminate of the acrylic plate/the solidified product/the copper foil was obtained.
5. The acrylic plate side of the laminate of the acrylic plate/the solidified product/the copper foil was fixed in a rheometer (CR-150 and CR-500DX available from Sun Scientific Co., Ltd.), and the upper end on the copper foil side was sandwiched with a jig of the rheometer. The laminate was pulled at an angle of 90° and a speed of 100 mm/min, and the peel strength was measured.

Example 2

The procedure was carried out in the same manner as in Example 1 except for changing the drying conditions from 60°C for 30 minutes to 80°C for 22.5 minutes in the manufacturing of the electrode.

Example 3

The procedure was carried out in the same manner as in Example 1 except for changing the drying conditions from 60°C for 30 minutes to 120°C for 15 minutes in the manufacturing of the electrode.

Comparative Examples 1 to 3

The procedure was carried out in the same manner as in Examples 1 to 3 except for using 2 g of an SBR aqueous dispersion (product name "TRD2001" (available from JSR Corporation)) in place of using 84 g of the CNF slurry solution (1), adjusting the water content to give a solid content concentration in the entire slurry of 50%, and obtaining a slurry (2) in the manufacturing of the slurry; and using the slurry (2) in place of the slurry (1) in the manufacturing of the electrode.

Comparative Examples 4 to 5

The procedure was carried out in the same manner as in Examples 1 and 3 except for using 10 g of an SBR aqueous dispersion (product name "TRD2001" (available from JSR Corporation)) in place of using 84 g of the CNF slurry solution (1), adjusting the water content to give a solid content concentration in the entire slurry of 50%, and obtaining a slurry (3) in the manufacturing of the slurry; and using the slurry (3) in place of the slurry (1) in the manufacturing of the electrode.
The results are summarized and shown in the table below.

[Table 1]

Table 1

| | Drying temperature (°C) | Peel strength ratio (to 60°C) | Peel strength ratio (to Example 1) |
|---|---|---|---|
| Example 1 | 60 | - | - |
| Example 2 | 80 | 0.91 | 0.91 |
| Example 3 | 120 | 1.03 | 1.03 |
| Comparative Example 1 | 60 | - | 0.91 |
| Comparative Example 2 | 80 | 0.77 | 0.7 |
| Comparative Example 3 | 120 | 0.69 | 0.63 |
| Comparative Example 4 | 60 | - | 5.26 |
| Comparative Example 5 | 120 | 0.04 | 0.23 |
| *The peel strength ratio (to 60°C) is a ratio of the peel strength to that of the electrode obtained in drying conditions of 60°C. | | | |

The peel strength ratio (to Example 1) is a ratio of the peel strength to that of the electrode obtained in Example 1.
As apparent from the table above, the electrodes manufactured using the slurry of the present application had small differences in peel strengths caused by drying temperature, compared to electrodes manufactured using a slurry of Comparative Examples. The slurry of the present application was able to maintain high adhesion even at a high temperature of 120°C while the slurries of Comparative Examples exhibited rapid decrease in adhesive strength when dried at 120°C. And thus, this showed that using the slurry of the present application enables manufacturing of an electrode with high battery capacity with excellent workability and high yield.
To summarize the above, configurations and variations of the present invention are described below.

(1) A slurry containing at least an active material and a fibrous adhesion-imparting component, wherein the slurry has a property expressed by Equation (1) below:

$$(\text{Peel strength } P_{60}) / (\text{peel strength } P_{80}) \geq 0.8 \quad (1)$$

where the peel strength $P_{60}$ is peel strength determined as follows: a laminate of a copper foil/a solidified product/an acrylic plate is prepared by applying the slurry to a surface of a copper foil having a thickness of 15 μm and drying at 60°C for 30 minutes to produce a solidified product with a length of 25 mm, a width of 150 mm, and a thickness of 100 μm, bonding an acrylic plate to a surface of the solidified product with a double-sided adhesive tape, and

reciprocating a 1-kg weight 5 times; the peel strength is determined when a copper foil edge is peeled at an angle of 90° and a speed of 100 mm/min in a state where the acrylic plate side of the resulting laminate is fixed; and the peel strength Pso is peel strength determined by the same method as the peel strength $P_{60}$ except for changing the drying conditions to 80°C for 22.5 minutes.

(2) The slurry according to (1), wherein a content of the fibrous adhesion-imparting component is from 0.01 to 10 parts by weight per part by weight of the active material.

(3) The slurry according to (1) or (2), wherein an average thickness of the fibrous adhesion-imparting component is from 1 to 1000 nm.

(4) The slurry according to any one of (1) to (3), wherein an average length of the fibrous adhesion-imparting component is from 0.01 to 1000 μm.

(5) The slurry according to any one of (1) to (4), wherein an average aspect ratio (average length/average thickness) of the fibrous adhesion-imparting component is from 10 to 1000.

(6) The slurry according to any one of (1) to (5), wherein the fibrous adhesion-imparting component is a cellulose fiber.

(7) The slurry according to any one of (1) to (6), wherein the fibrous adhesion-imparting component has an average thickness from 1 to 1000 nm and an average aspect ratio from 10 to 1000.

(8) The slurry according to any one of (1) to (7), wherein the active material is at least one selected from the group consisting of metal oxides, lithium-containing complex oxides, single-element silicon, silicon compounds, and carbon materials.

(9) The slurry according to any one of (1) to (8), wherein a content of the active material in a total amount of non-volatile matter contained in the slurry is 90 wt.% or higher.

(10) The slurry according to any one of (1) to (9), wherein a content of the fibrous adhesion-imparting component in a total amount of non-volatile matter contained in the slurry is from 0.01 to 10.0 parts by weight.

(11) The slurry according to any one of (1) to (10), further containing a binder.

(12) The slurry according to any one of (11), wherein the binder is an aqueous binder.

(13) The slurry according to (11) or (12), wherein the binder is at least one selected from cellulose, carboxymethyl cellulose, hydroxyethyl cellulose, hydroxypropyl cellulose, hydroxypropyl methylcellulose, and carboxymethyl starch.

(14) The slurry according to any one of (11) to (13), wherein a content of the binder is from 0.01 to 10 parts by weight per part by weight of the active material.

(15) The slurry according to any one of (11) to (14), wherein the binder is a binder having a melting point (decomposition temperature for a binder having no melting point) of 120°C or higher.

(16) The slurry according to any one of (11) to (15), wherein the binder is a binder having a viscosity of a 1 wt.% aqueous solution at 25°C and 60 rotations of 10 to 10000 mPa•s.

(17) The slurry according to any one of (11) to (16), wherein a content of the binder in a total amount of non-volatile matter contained in the slurry is from 0.01 to 10.0 parts by weight.

(18) The slurry according to any one of (11) to (17), wherein a total content of the fibrous adhesion-imparting component and the binder in a total amount of non-volatile matter contained in the slurry is from 0.02 to 20 wt.%.

(19) The slurry according to any one of (11) to (18), wherein a content ratio of the fibrous adhesion-imparting component to the binder (former/latter; weight ratio) is from 0.1 to 5.0.

(20) The slurry according to any one of (11) to (19), wherein a total content of the binder and the fibrous adhesion-imparting component is from 0.02 to 20 wt.%.

(21) The slurry according to any one of (11) to (20), wherein a total content of the binder, the fibrous adhesion-imparting component, and the active material is from 20 to 70 wt.%.

(22) The slurry according to any one of (11) to (21), wherein a content of the binder in a supernatant obtained by centrifuging the slurry in conditions of 5000 rpm for 5 minutes is 45 wt.% or higher of a total amount of the binder contained in the slurry.

(23) A solidified product of the slurry described in any one of (1) to (22).

(24) An electrode including a laminate of the solidified product described in (23) and a current collector.

(25) The electrode according to (24), wherein a ratio of a film thickness of an edge of the solidified product to a film thickness of a center of the solidified product is 0.9 or greater.

(26) The electrode according to (24) or (25), wherein a film thickness of the solidified product is 50 μm or greater.

(27) A battery provided with the electrode described in any one of (24) to (26).

Industrial Applicability

The slurry according to an embodiment of the present invention can be suitably used in applications for forming an electrode active material layer suitably used in information-related devices, such as smart phones or notebook computers; hybrid vehicles, electric vehicles, and the like.

## Claims

1. A slurry comprising at least an active material and a fibrous adhesion-imparting component, wherein the slurry has a property expressed by Equation (1):

$$(\text{Peel strength } P_{60}) / (\text{peel strength } P_{80}) \geq 0.8 \quad (1)$$

where the peel strength $P_{60}$ is peel strength determined as follows: a laminate of a copper foil/a solidified product/an acrylic plate is prepared by applying the slurry to a surface of a copper foil having a thickness of 15 μm and drying at 60°C for 30 minutes to produce a solidified product with a length of 25 mm, a width of 150 mm, and a thickness of 100 μm, bonding an acrylic plate to a surface of the solidified product with a double-sided adhesive tape, and reciprocating a 1-kg weight 5 times; the peel strength is determined when a copper foil edge is peeled at an angle of 90°and a speed of 100 mm/min in a state where the acrylic plate side of the resulting laminate is fixed; and the peel strength $P_{80}$ is peel strength determined by the same method as the peel strength $P_{60}$ except for changing the drying conditions to 80°C for 22.5 minutes.

2. The slurry according to claim 1, wherein a proportion of the fibrous adhesion-imparting component in a total amount of non-volatile matter contained in the slurry is from 0.01 to 10 wt.%.

3. The slurry according to claim 1 or 2, wherein a content of the fibrous adhesion-imparting component is from 0.01 to 10 parts by weight per part by weight of the active material.

4. The slurry according to any one of claims 1 to 3, wherein the fibrous adhesion-imparting component is a cellulose fiber.

5. The slurry according to any one of claims 1 to 4, wherein the fibrous adhesion-imparting component has an average thickness from 1 to 1000 nm and an average aspect ratio from 10 to 1000.

6. The slurry according to any one of claims 1 to 5, further comprising at least one binder selected from cellulose, carboxymethyl cellulose, hydroxyethyl cellulose, hydroxypropyl cellulose, hydroxypropyl methylcellulose, and carboxymethyl starch.

7. A solidified product of the slurry described in any one of claims 1 to 6.

8. An electrode comprising a laminate of the solidified product described in claim 7 and a current collector.

9. A battery comprising the electrode described in claim 8.

## INTERNATIONAL SEARCH REPORT

International application No. PCT/JP2019/021414

A. CLASSIFICATION OF SUBJECT MATTER
Int. Cl. H01M4/04(2006.01)i, H01M4/02(2006.01)i, H01G11/30(2013.01)n, H01G11/86(2013.01)n, H01M4/62(2006.01)n

According to International Patent Classification (IPC) or to both national classification and IPC

B. FIELDS SEARCHED

Minimum documentation searched (classification system followed by classification symbols)
Int. Cl. H01M4/04, H01M4/02, H01G11/30, H01G11/86, H01M4/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2018-116819 A (DAICEL CORP.) 26 July 2018, paragraphs [0076], [0084], [0100] & WO 2018/135353 A1 & TW 201832403 A | 1-9 |
| X | WO 2012/026009 A1 (TOYOTA MOTOR CORP.) 01 March 2012, claims 1, 4, paragraphs [0007], [0008], [0026], [0027], [0030], [0032] & US 2013/0157130 A1, claims 8, 10, paragraphs [0012], [0013], [0038], [0039], [0043], [0045] & CN 103081185 A & KR 10-2013-0058054 A | 1-9 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 13.08.2019 | 27.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009043641 A